(19) Europäisches Patentamt
European Patent Office
Office européen des brevets

(11) **EP 1 727 270 B1**

(12) **EUROPÄISCHE PATENTSCHRIFT**

(45) Veröffentlichungstag und Bekanntmachung des Hinweises auf die Patenterteilung:
**22.12.2010  Patentblatt 2010/51**

(51) Int Cl.:
*H02P 7/28* (2006.01)     *H02H 7/085* (2006.01)
*F24D 19/10* (2006.01)    *G05D 23/19* (2006.01)

(21) Anmeldenummer: **05011434.7**

(22) Anmeldetag: **27.05.2005**

(54) **Stellenantrieb mit einem Elektromotor und einer Reglereinrichtung zur Regelung der Drehzahl des Elektromotors**

Actuator with electrical motor and a control device to control the motor speed

Actionneur avec moteur électrique et dispositif de réglage pour commander la vitesse du moteur

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**29.11.2006  Patentblatt 2006/48**

(73) Patentinhaber: **SIEMENS AKTIENGESELLSCHAFT 80333 München (DE)**

(72) Erfinder: **Lendi, Dominic 8925 Ebertwil (CH)**

(56) Entgegenhaltungen:
**DE-A1- 19 901 840     DE-B3- 10 312 373
US-A1- 2003 034 898**

- **PATENT ABSTRACTS OF JAPAN Bd. 2002, Nr. 08, 5. August 2002 (2002-08-05) -& JP 2002 117616 A (HITACHI LTD), 19. April 2002 (2002-04-19)**
- **PATENT ABSTRACTS OF JAPAN Bd. 2003, Nr. 12, 5. Dezember 2003 (2003-12-05) -& JP 2005 000714 A (HITACHI KIDEN KOGYO LTD), 6. Januar 2005 (2005-01-06)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf einen Stellantrieb zur Betätigung eines Stellglieds gemäss dem Oberbegriff des Anspruchs 1.

Ein Stellantrieb gemäss der Erfindung ist energieeffizient und geräuscharm und er ist vorteilhaft zur Betätigung eines Ventils in der Heizungs-, Lüftungs-, Kälte- und Klimatechnik einsetzbar. Mit dem Stellantrieb ist insbesondere ein Radiatorventil drahtlos fernsteuerbar.

Fernsteuerbare Heizwasserventile sind beispielsweise aus DE2800704A, DE2952695A und DE4221094A bekannt.

Aus WO99/15822A1 ist ein Stellantrieb für ein Thermostatventil bekannt, bei dem die Drehzahl eines Elektromotors regelbar ist.

Für den Wohnbereich - insbesondere für Schlafzimmer - sind Stellantriebe so auszulegen, dass diese im Betrieb möglichst leise arbeiten. Drahtlos ferngesteuerte Stellantriebe werden in der Regel mit einer Batterie betrieben, deren Auswechslung mit Betriebsunterbrüchen und Kosten verbunden ist. Daher ist der Energiebedarf bei einem ferngesteuerten Stellantrieb zu minimieren.

Der Erfindung liegt die Aufgabe zu Grunde, einen drahtlos fernsteuerbaren Stellantrieb zu schaffen, der energieeffizient und leise arbeitet und daher auch im Wohnbereich einsetzbar ist.

Die genannte Aufgabe wird erfindungsgemäss durch die Merkmale des Anspruchs 1 gelöst.

Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:

Fig. 1     ein Blockschaltbild einer Regel- und Steuerein-richtung eines Stellantriebs,
Fig. 2     ein Blockschaltbild zur Funktionsweise eines Motortreibermoduls,
Fig. 3     Zustände eines Stellglieds,
Fig. 4     ein Diagramm zum Verlauf einer Stellkraft,
Fig. 5     ein Rechenmodul zur Berechung der Stellkraft,
Fig. 6     ein Blockschaltbild zur Darstellung einer optimierten Energiezuteilung im batteriegespeisten Stellantrieb,
Fig. 7     ein Blockschaltbild zur Funktionsweise des Stellantriebs, und
Fig. 8     eine Variante des Stellantriebs.

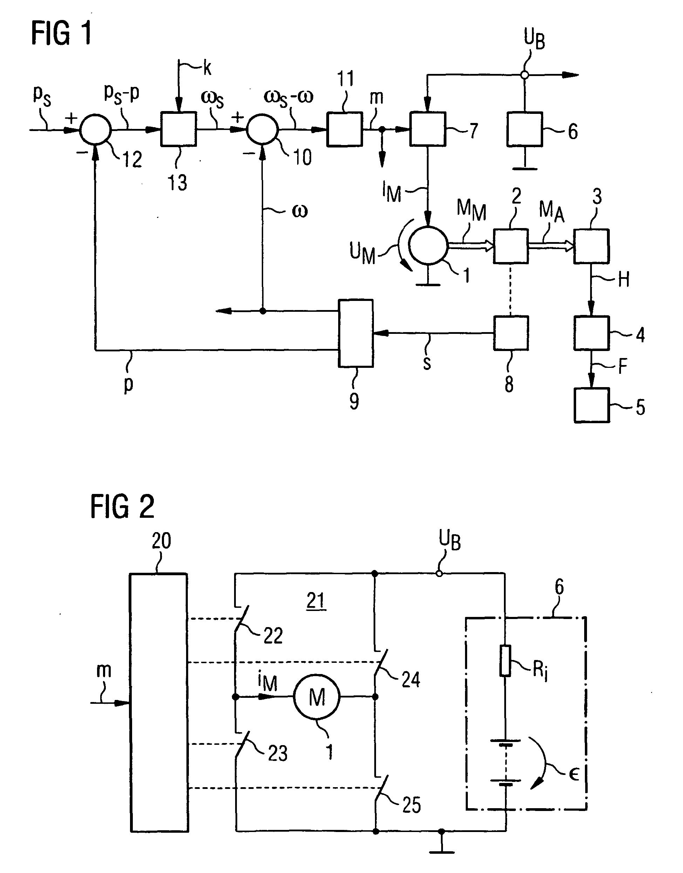

In der Fig. 1 ist mit 1 ein Elektromotor bezeichnet, der über ein Getriebe 2 mit einem Transformationselement 3 gekoppelt ist. Ein vom Elektromotor 1 generiertes Drehmoment $M_M$ wird durch das Getriebe 2 in ein an das Transformationselement 3 übertragenes Antriebsmoment $M_A$ umgesetzt. Das Transformationselement 3 wandelt eine vom Elektromotor 1 generierte Drehbewegung in eine Längsbewegung mit einem Hub H. Durch die Längsbewegung wirkt ein Stössel 4 mit einer Stellkraft F auf ein Stellglied 5. Das Stellglied 5 ist hier ein Ventil mit einem Schliesskörper, auf den der Stössel 4 wirkt. Das Ventil ist typischerweise ein stufenlos verstellbares Ventil in einem Heiz- oder Kühlwasserkreis, beispielhaft ein Radiatorventil.

Der Elektromotor 1 wird über ein mit einer Spannungsquelle 6 verbundenes Motortreibermodul 7 gespeist.

Am Getriebe 2 ist eine Sensoreinrichtung 8 zur Erfassung einer Drehbewegung angeordnet. Ein von der Sensoreinrichtung 8 generiertes Signal s wird beispielhaft auf ein Berechnungsmodul 9 geführt. Mit Vorteil werden im Berechnungsmodul 9 mit Hilfe des Signals s ein Geschwindigkeitssignal $\omega$ und ein Positionssignal p generiert.

Eine Regeleinrichtung eines Stellantriebs für das Stellglied 5 weist eine innere geschlossene Regelschleife und mit Vorteil auch eine äussere geschlossene Regelschleife auf. Die innere Regelschleife führt von der Sensoreinrichtung 8 über das vom Berechnungsmodul 9 umgesetzte Geschwindigkeitssignal $\omega$ und eine erste Vergleichseinrichtung 10 über ein erstes Regelmodul 11 auf das Motortreibermodul 7. Die äussere Regelschleife führt von der Sensoreinrichtung 8 über das vom Berechnungsmodul 9 umgesetzte Positionssignal p und eine zweite Vergleichseinrichtung 12 über ein zweites Regelmodul 13 auf die erste Vergleichseinrichtung 10, und von da über das erste Regelmodul 11 auf das Motortreibermodul 7. An der zweiten Vergleichseinrichtung 12 wird als Führungsgrösse mit Vorteil ein Sollpositionssignal $p_s$ des Stellelements eingespeist.

In einem vorteilhaften Ausführungsbeispiel des Stellantriebs ist der Elektromotor 1 ein Gleichstrommotor und das Motortreibermodul 7 weist eine Treibereinheit 20 (Fig. 2) und eine an der Batteriespannung $U_B$ liegende Brückenschaltung 21 zur Ansteuerung des Elektromotors 1 auf. Vier elektronische Schalter 22, 23, 24 und 25 der Brückenschaltung 21 sind von der Treibereinheit 20 ansteuerbar. Durch entsprechende Zustände der vier Schalter 22, 23, 24 und 25 sind die Dauer und die Polarität eines Stromes $I_M$ durch den Elektromotor 1 von der Treibereinheit 20 aus steuerbar.

Die Treibereinheit 20 ist mit Vorteil über ein Steuersignal m ansteuerbar.

Das Steuersignal m ist beispielhaft ein Signal, dessen Pulsweite durch das erste Regelmodul 11 moduliert wird.

Die Treibereinheit 20 ist beispielhaft ein integrierter Baustein, während die elektronischen Schalter 22, 23, 24 und 25 beispielsweise durch MOS-Feldeffekttransistoren verwirklicht sind.

Grundsätzlich ist das Motortreibermodul 7 in seinem Aufbau an einen gewählten Motorentyp anzupassen, wobei je nach Anforderung an den Stellantrieb ein geeigneter Motorentyp gewählt und beispielsweise an Stelle der Brückenschaltung 21 eine an den Motortyp angepasste elektronische Kommutierungsschaltung eingesetzt wird.

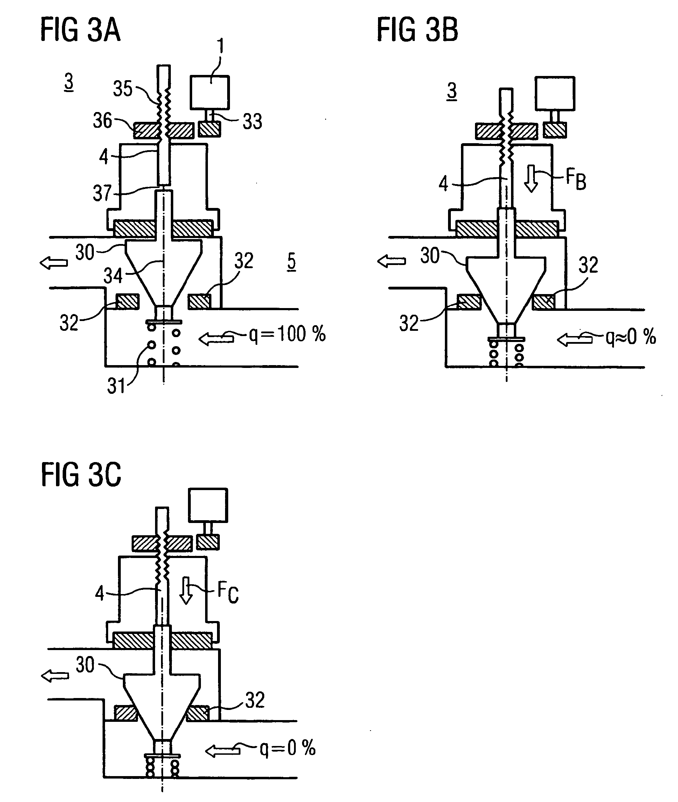

Das in den Fig. 3a, 3b und 3c vereinfacht dargestellte Stellglied 5 ist beispielhaft ein Ventil mit einem als Stellelement nutzbaren Schliesskörper 30, der über den Stössel 4 gegen die Kraft einer Feder 31 zu einem Ventilsitz 32 hin bewegbar ist. Der Stössel 4 ist, je nach Drehrichtung einer Antriebsspindel 33 des Elektromotors 1, auf einer Längsachse 34 des Schliesskörpers 30 hin und her bewegbar. Das Transformationselement 3 ist hier ein am Stössel 4 ausgebildetes Aussengewinde 35 in Verbindung mit einem an einem Getrieberad 36 ausgebildeten Innengewinde.

In der Fig. 3a ist das Ventil in offenem Zustand dargestellt, der Schliesskörper 30 ist also in einer ersten Endlage, ein möglicher Durchfluss q für ein Fluid ist 100%. Auch der Stössel 4 ist in einer Endlage, wobei sich zwischen dem Stössel 4 und dem Schliesskörper 30 ein Luftspalt 37 bildet. Insbesondere dann, wenn der Ventilantrieb als Universalantrieb auf unterschiedliche Ventiltypen montierbar ist, werden individuell erreichbare Endpositionen bei Schliesskörper und Ventilantrieb nicht genau übereinstimmen. Mit Vorteil werden gemeinsame Endpositionen des Ventilantriebs und des Schliesskörpers nach der Montage in einem Kalibrierverfahren definiert und vorteilhafterweise in einem Hubmodell im Stellantrieb abgespeichert.

In der Fig. 3b wirkt der Stössel 4 mit einer Stellkraft $F_B$ auf den Schliesskörper 30, der im dargestellten Zustand am Ventilsitz 32 aufliegt. Der Durchfluss q ist in diesem Zustand etwa 0%, das Ventil ist praktisch geschlossen.

In dem in der Fig. 3c dargestellten Zustand des Ventils wirkt der Stössel 4 mit einer - bezogen auf den in der Fig. 3b dargestellten Zustand - grösseren Stellkraft $F_C$ auf den Schliesskörper 30, so dass der Schliesskörper 30 in den Ventilsitz 32 gepresst wird. Der Ventilsitz 32 ist hier beispielsweise aus einem elastischen Material, welches bei der entsprechend grossen Stellkraft $F_C$ vom Schliesskörper 30 verformt wird. Der Durchfluss q ist in diesem Zustand 0%, das Ventil ist dicht geschlossen.

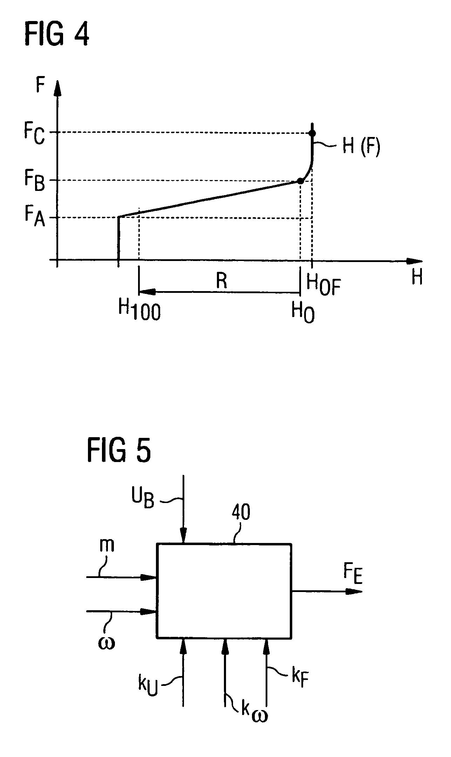

In der Fig. 4 ist ein Hubmodell des Ventils als prinzipieller Verlauf H(F) dargestellt. Der Verlauf H(F) zeigt den Zusammenhang zwischen dem Hub H des Schliesskörpers 30 und der am Schliesskörper 30 angelegten Stellkraft F. Bis zu einem minimalen Wert $F_A$ bleibt der Schliesskörper 30 in der in der Fig. 3a dargestellten ersten Endlage. Damit der Schliesskörper 30 gegen den Ventilsitz 32 hin bewegbar ist, muss der gegen die Feder 31 arbeitende Stössel 4 eine etwa linear zunehmende Stellkraft F überwinden. Bei einem gewissen Wert $F_B$ der Stellkraft ist im Diagramm ein zugehöriger Bezugswert $H_0$ des Hubs eingezeichnet. Der Bezugswert $H_0$ entspricht einem Zustand des Stellglieds, bei dem der als Stellelement funktionierende Schliesskörper 30 den Ventilsitz 32 erreicht. Ein zusätzlicher Hub, über den Bezugswert $H_0$ hinaus gegen einen Absperrwert $H_{0F}$, erfordert eine stark überproportionale Erhöhung der Stellkraft F über den Wert $F_B$ hinaus gegen den Wert $F_C$. Die besagte überproportionale Erhöhung der Stellkraft F aber erfordert auch eine starke Zunahme der momentanen Leistung des Elektromotors 1 und damit einen entsprechend hohen Energieverbrauch.

In einem vorteilhaften Regelverfahren, in dem der Durchfluss q mit dem Stellglied 5 zu steuern ist, wird der Bezugswert $H_0$ möglichst nicht überschritten, sofern ein Energieverbrauch des Stellantriebs minimal sein soll, was bei einer Energieversorgung mittels Batterie mit Vorteil anzustreben ist.

In einem vorteilhaften Kalibrierungsverfahren für ein Stellglied, welches ein Stellelement mit wenigstens einer mechanisch blockierten Endlage aufweist, wird vorteilhafterweise eine vom Stellantrieb aufgebrachte Kraft oder ein vom Stellantrieb aufgebrachtes Drehmoment erfasst und beim Erreichen eines vorbestimmten Werts der Kraft bzw. des Drehmoments die aktuelle Position des Stellelements erfasst und als mechanische Endlage des Stellglieds bzw. des Stellelements abgespeichert und in einem Regelverfahren berücksichtigt.

Das Kalibrierungsverfahren wird beispielsweise über ein dem zweiten Regelmodul 13 (Fig. 1) zugeführtes Startsignal k ausgelöst. Mit Vorteil wird die Umlauffrequenz des Elektromotors 1 während des Kalibrierungsverfahrens auf einen gegenüber einem Normalbetrieb niederen Wert konstant gehalten, indem der vom zweiten Regelmodul 13 generierte Geschwindigkeitssollwert $\omega_s$ entsprechend angepasst wird.

Ist das Stellglied beispielsweise ein im Ruhezustand offenes Thermostatventil, dessen Hub H sich in Abhängigkeit von der Stellkraft F prinzipiell wie in der Fig. 4 dargestellt verhält, wird der Schliesskörper mit Vorteil nur im Kalibrierungsverfahren über den Bezugswert $H_0$ des Hubs hinaus bewegt.

Ein im Hubmodell des Stellantriebs abgespeicherter Regelbereich R (Fig. 4) wird mit Vorteil vom ermittelten Bezugswert $H_0$ abhängig festgelegt. Der Regelbereich R für das beispielhafte Thermostatventil umfasst damit für eine Regelung nutzbare Endlagen bei $H_0$ - also geschlossen, bzw.

Durchfluss $q \cong 0\%$ - und $H_{100}$ - also offen, bzw. Durchfluss q = 100%.

Die Information des von der Sensoreinrichtung 8 (Fig. 1) gelieferte Signals s ermöglicht eine Berechnung der aktuellen Umlauffrequenz des Elektromotors 1 und der Bewegung des Stössels 4. Mit Vorteil ist im Berechnungsmodul 9 ein Hubmodell abgespeichert, in dem wichtige Parameter wie eine aktuelle Position des Schliesskörpers, Endpositionen des Schliesskörpers 30 und eine aktuelle Geschwindigkeit, vorzugsweise die aktuelle Umlauffrequenz des Elektromotors 1 oder bei Bedarf die aktuelle Geschwindigkeit des Schliesskörpers 30 verfügbar sind.

Die Sensoreinrichtung 8 umfasst vorzugsweise eine Lichtquelle und eine auf das Spektrum der Lichtquelle abgestimmte Detektoreinheit, wobei die Lichtquelle auf ein vom Elektromotor 1 bewegtes optisches Muster gerichtet ist, so dass bei laufendem Elektromotor 1 Lichtpulse auf die Detektoreinheit gelangen. Das optische Muster ist beispielsweise eine am Getriebe 2 angeordnete Scheibe mit optisch reflektierenden Zonen, oder mit Löchern oder Zähnen, die derart ausgebildet sind, dass ein Signal der Lichtquelle durch das bewegte optische Muster moduliert wird.

Grundsätzlich kann die Sensoreinrichtung 8 aber auch anders, beispielsweise mittels induktiv arbeitender Einrichtung implementiert werden.

In der zweiten Vergleichseinrichtung 12 wird aus dem Sollpositionssignal $p_s$ und dem vom Berechnungsmodul 9 ermittelten Positionssignal p eine Regeldifferenz $(p_s - p)$ gebildet und an das zweite Regelmodul 13 geleitet. Im zweiten Regelmodul 13 wird eine Führungsgrösse für die erste Vergleichseinrichtung 10 generiert. Die Führungsgrösse ist mit Vorteil ein Geschwindigkeitssollwert $\omega_s$. In der ersten Vergleichseinrichtung 10 wird aus dem Geschwindigkeitssollwert $\omega_s$ und dem vom Berechnungsmodul 9 ermittelten Geschwindigkeitssignal $\omega$ eine Regeldifferenz $(\omega_s - \omega)$ gebildet und an das erste Regelmodul 11 geleitet. Im ersten Regelmodul 11 wird mit Hilfe der Regeldifferenz $(\omega_s - \omega)$ das Steuersignal m für das Motortreibermodul 7 generiert.

Durch die das erste Regelmodul 11 aufweisende innere Regelschleife wird die Drehzahl des Elektromotors 1 konstant gehalten. Damit sind auch rotierende Elemente des mit dem Elektromotor 1 mechanisch gekoppelten Getriebes 2 und des Transformationselements 3 zur Neutralisierung ihrer Massenträgheitsmomente jeweils auf konstante Umlauffrequenzen geregelt. Die Regelung des Elektromotors 1 auf eine konstante Umlauffrequenz bringt die Vorteile, dass auch ein drehzahlabhängiger Geräuschpegel des Stellantriebs konstant ist und durch geeignete Wahl des Geschwindigkeitssollwerts $\omega_s$ optimierbar ist. Ferner ist mit der besagten Geschwindigkeitsregelung der Vorteil verbunden, dass Selbstinduktion des Elektromotors 1 und Massenträgheitsmomente rotierender Elemente des Stellantriebs in der Berechnung eines aktuellen Schätzwerts $F_E$ für die Stellkraft F nicht berücksichtigt werden müssen.

Eine Endlage eines Stellelements ist zuverlässig bestimmbar, wenn das Stellelement gegen die Endlage hin bewegt wird und dabei durch ein Rechenmodul 40 (Fig. 5) des Stellantriebs wiederholt der aktuelle Schätzwerts $F_E$ für die Stellkraft F berechnet und mit einem vorbestimmten Grenzwert verglichen wird.

Mit Hilfe des am Motortreibermodul 7 angelegten Steuersignals m und der Batteriespannung $U_B$ ist der Schätzwert $F_E$ in einer ersten Variante nur näherungsweise mit einer linearen Formel A berechenbar. Das aus dem Steuersignal m, dem aktuellen Wert der Batteriespannung $U_B$ und einer ersten Konstante $k_U$ gebildete Produkt wird um eine zweite Konstante $k_F$ vermindert:

$$F_E = U_B \times k_U \times m - k_F \qquad \{ \text{ Formel A } \}$$

Dadurch, dass bei der Berechnung des Schätzwerts $F_E$ neben dem Steuersignal m auch noch das auf die erste Vergleichseinrichtung 10 zurückgeführte Geschwindigkeitssignal $\omega$ verwendet wird, ergibt sich mit einer Formel B eine verbesserte Variante, in welcher der Schätzwert $F_E$ genauer berechenbar ist. Das Geschwindigkeitssignal $\omega$ wird mit einer dritten Konstante $k_\omega$ multipliziert und das resultierende Produkt vom Schätzwert $F_E$ abgezogen. Die mathematische Beschreibung des Antriebsmodells und damit die Formel B zur verbesserten Berechnung des Schätzwerts $F_E$ lautet also:

$$F_E = U_B \times k_U \times m - k_\omega \times \omega - k_F \qquad \{ \text{ Formel B } \}$$

Die Formel B zur Berechnung des Schätzwerts $F_E$ ist mit den drei Konstanten für eine mikroprozessorgerechte Implementierung optimiert aufgebaut. Es versteht sich von selbst, dass die Formel B durch mathematische Umformung, beispielsweise verbunden mit einer Erhöhung der Anzahl verwendeter Konstanten, ein geeigneter Schätzwert der Stellkraft berechenbar ist.

Mit wenig Aufwand können die drei Konstanten $k_U$, $k_\omega$ und $k_F$ so bestimmt werden, dass der Schätzwert $F_E$ für die Bestimmung der Endlage des Stellelements genügend genau berechenbar ist.

Durch die drei Konstanten $k_U$, $k_\omega$ und $k_F$ werden Kennwerte oder Eigenschaften des Elektromotors 1, des Motortreibermoduls 7, des Getriebes 8 und des Transformationselements 3 berücksichtigt.

Das Rechenmodul 40 umfasst eine vorteilhafterweise in einem Mikrocomputer des Stellantriebs abgespeicherte Datenstruktur und wenigstens eine vom Mikrocomputer ausführbare Programmroutine zur Berechnung des Schätzwerts

$F_E$. Die aktuelle Batteriespannung $U_B$ wird zur Berechnung des Schätzwerts $F_E$ beispielhaft jeweils über einen Analogeingang des Mikrocomputers eingelesen.

In einer beispielhaften Implementierung des Rechenmoduls 40 sind die Eigenschaften des Motortreibermoduls 7 insbesondere mit der ersten Konstante $k_U$ berücksichtigt, während mit der zweiten Konstante $k_\omega$ vor allem Kennwerte des Elektromotors 1, wie beispielsweise Motorkonstante und Gleichstromwiderstand berücksichtigt sind. Das Getriebe 8 wird mit der dritten Konstante $k_F$ berücksichtigt. Ausserdem ist bei der Berechnung des Schätzwerts $F_E$ der Wirkungsgrad des Stellantriebs berücksichtigt, indem er in jede der drei Konstanten $k_U$, $k_\omega$ und $k_F$ einfliesst.

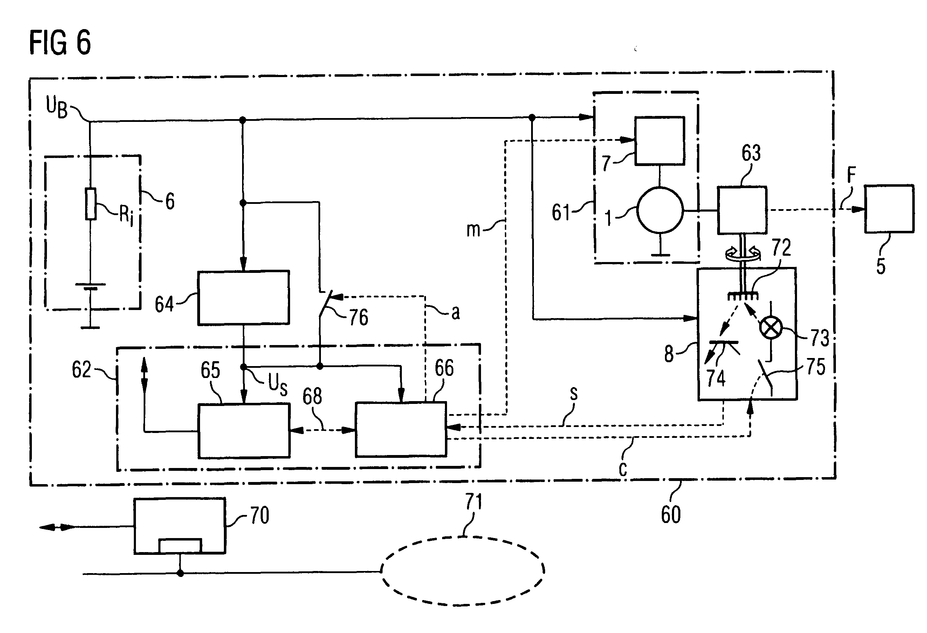

In der Fig. 6 ist mit 60 der Stellantrieb für das Stellglied 5 (Fig. 1) bezeichnet. Der Stellantrieb 60 weist eine Antriebseinheit 61, eine Getriebeeinheit 63, eine Steuer- und Regeleinheit 62, die als Batterie implementierte Spannungsquelle 6 (Fig. 1), einen Spannungsregler 64 und die Sensoreinrichtung 8 (Fig. 1) auf.

Der Steuer- und Regeleinheit 62 sind eine Sende-Empfängereinheit 65 und eine Mikrocomputereinheit 66 zugeordnet.

Die Antriebseinheit 61 umfasst das Motortreibermodul 7 (Fig. 1) und den Elektromotor 1 (Fig. 1). Die Getriebeeinheit 63 ist vom Elektromotor 1 antreibbar. Die mit der Stellkraft F auf das Stellglied 5 wirkende Getriebeeinheit 63 umfasst das Getriebe 2 (Fig. 1), das Transformationselement 3 (Fig. 1) und den Stössel 4 (Fig. 1).

Die Sende-Empfängereinheit 65 und die Mikrocomputereinheit 66 sind über einen Kommunikationskanal 68 miteinander verbunden.

Das Steuersignal m (Fig. 1) zur Ansteuerung des Motortreibermoduls 7 wird durch die Mikrocomputereinheit 66 generiert. Das von der Sensoreinrichtung 8 gelieferte Signal s ist auf einen Eingang der Mikrocomputereinheit 66 geführt.

Die Antriebseinheit 61 und mit Vorteil auch die Sensoreinrichtung 8 sind zur Energieversorgung direkt an die Batteriespannung $U_B$ der Batterie 6 angeschlossen, während die Steuer- und Regeleinheit 62 über den mit der Batterie 6 verbundenen Spannungsregler 64 speisbar ist.

Der Stellantrieb 60 hat ein optimiertes Energiemanagement, welches von der Mikrocomputereinheit 66 gesteuert wird. Dabei werden mit Vorteil die Antriebseinheit 61, die Sensoreinheit 8 und die Sende-Empfängereinheit 65 von der Mikrocomputereinheit 66 sequenziell angesteuert, so dass die von den Einheiten 61, 8 und 65 bezogene elektrische Energie zeitlich versetzt und verzahnt und nicht kumuliert anfällt. Ausserdem wird mit Vorteil die maximale Stromaufnahme der Antriebseinheit 61 begrenzt. Durch die besagte sequenzielle Ansteuerung und die Strombegrenzung werden Stromspitzen vermieden, welche - bedingt durch einen Innenwiderstand $R_i$ der Batterie 6 - zu einem unzulässigen Absinken der Batteriespannung $U_B$ führen würden. Insbesondere werden durch die Strombegrenzung so genannte Anfahrstromspitzen der Antriebseinheit 61 begrenzt.

Zwischen der Sende-Empfängereinheit 66 und einer externen Station 70 ist eine bidirektionale drahtlose Datenkommunikationsverbindung aufbaubar. Die externe Station 70 ist beispielsweise ein Bediengerät, eine Zentrale oder eine übergeordnete Steuereinrichtung. Von der externen Station 70 wird dem Stellantrieb 60 typischerweise ein Temperatursollwert, ein Positionssollwert oder eine Betriebsart über die Datenkommunikationsverbindung übermittelt. Ausserdem ist aktuelle Zustandsinformation des Stellantriebs 60 über die Datenkommunikationsverbindung an die externe Station 70 übertragbar. In einer typischen Variante ist die externe Station 70 ein in ein Computernetz 71 eingebundener Knoten.

Damit der Stellantrieb 60 gegen aussen zuverlässig kommunikationsfähig ist, wird die Steuer- und Regeleinheit 62 über den mit der Batteriespannung $U_B$ verbundenen Spannungsregler 64 gespeist. Der Spannungsregler 64 sichert der Steuer- und Regeleinheit 62 eine konstante Betriebsspannung $U_S$, unabhängig vom jeweiligen Strombedarf der Antriebseinheit 61 und der Sensoreinheit 8.

Die Sensoreinrichtung 8 umfasst beispielhaft ein von der Getriebeeinheit 63 bewegbares optisches Muster 72, eine Lichtquelle 73 und eine Detektoreinheit 74. Das von der Sensoreinrichtung 8 an die Mikrocomputereinheit 66 übertragene Signal s wird durch die Detektoreinheit 74 aus dem vom optischen Muster 72 durch eine Bewegung der Getriebeeinheit 63 beeinflussten Lichtsignal der Lichtquelle 73 gewonnen.

Mit Vorteil ist die Lichtquelle 73 zur Minimierung des Energieverbrauchs durch ein von der Mikrocomputereinheit 66 generiertes Taktsignal c steuerbar. In einer Vorteilhaften Implementierung der Sensoreinrichtung 8 weist diese eine Modulationseinrichtung 75 auf, durch welche der von der Lichtquelle 73 generierte Lichtstrahl modulierbar ist. Mit Vorteil wird eine durch die Modulationseinrichtung 75 bewirkte Signaltransformation in der Mikrocomputereinheit 66 durch entsprechende Demodulation des von der Sensoreinrichtung 8 gelieferten Signals s berücksichtig.

Durch das von der Steuer- und Regeleinheit 62 generierte Steuersignal m wird der Elektromotor 1 in jeder Betriebsphase auf eine Konstante Drehzahl geregelt. Somit wird der Elektromotor 1 bezüglich seiner Kennlinie unabhängig vom Zustand der durch die Batterie verwirklichten Spannungsquelle 6 immer in einem optimalen Betriebspunkt betrieben.

Dadurch dass die Steuer- und Regeleinheit 62 über den Spannungsregler 64 gespeist wird, ist bei hoher Batteriespannung $U_B$ und auch bei einer durch die Antriebseinheit 61 und die Sensoreinheit 8 verursachten starken Belastung der Spannungsquelle 6 eine sichere Energieversorgung der Steuer- und Regeleinheit 62 gewährleistet.

In einer vorteilhaften Variante des Stellantriebs 60 weist dieser eine Schaltvorrichtung 76 zur Überbrückung des Spannungsreglers 64 auf. Die Schaltvorrichtung 76 ist mittels Aktivierungssignal a durch die Mikrocomputereinheit 66 betätigbar. Bei ausserordentlich niedriger Batteriespannung $U_B$ - also am Ende der Lebensdauer der Batterie - ergibt sich mit der Schaltvorrichtung 76 der Vorteil, dass der Spannungsregler 64 von der Mikrocomputereinheit 66 selbsttätig überbrückbar ist, so dass ein vom Spannungsregler 64 verursachter Spannungsabfall vermieden wird, indem die Steuer- und Regeleinheit 62 durch die Schaltvorrichtung 76 zur Speisung direkt an die Batteriespannung $U_B$ gelegt wird.

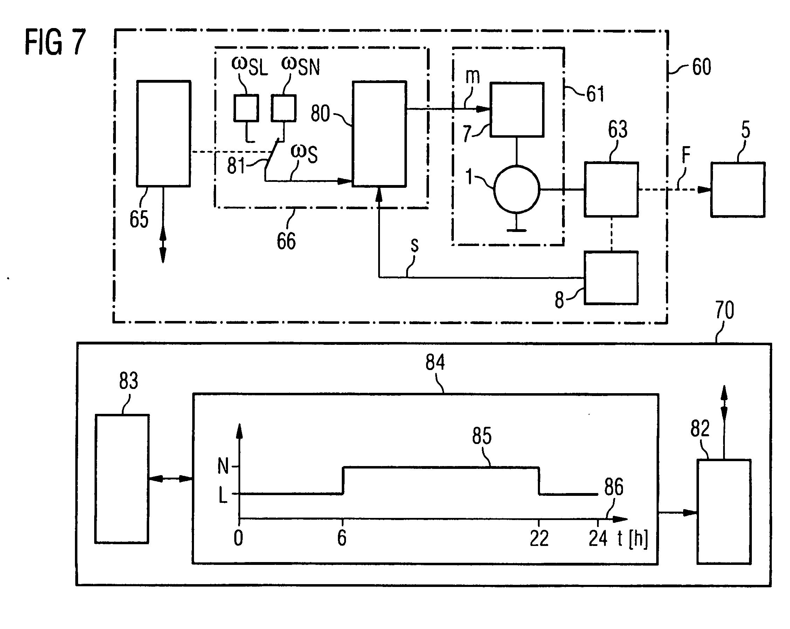

Fig. 7 zeigt den Stellantrieb 60 mit der Antriebseinheit 61, der Getriebeeinheit 63, der Sensoreinrichtung 8, der Mikrocomputereinheit 66 und der Sende-Empfängereinheit 65. Das vom Stellantrieb 60 über die Stellkraft F betätigbare Stellglied 5 ist beispielhaft ein Radiatorventil.

Derartige Stellantriebe haben die Eigenschaft, dass sie im Betrieb ein drehzahlabhängiges Geräusch generieren, dessen Geräuschpegel typischerweise mit zunehmender Drehzahl von Stellmotor bzw. Stellgetriebe ebenfalls zunimmt. Der Wirkungsgrad des Stellantriebs und damit auch der Energiekonsum für eine gewisse Stellbewegung ist drehzahlabhängig. Ein bezüglich Energiekonsum optimierter Stellantrieb aber verursacht für gewisse Anwendungen einen unzulässig hohen Geräuschpegel.

Die Mikrocomputereinheit 66 weist einen Antriebsregler 80 auf, durch den das auf die Antriebseinheit 61 geführte Steuersignal m generierbar ist, und auf den das von der Sensoreinrichtung 8 gelieferte Signal s zurückgeführt ist. Der vom Antriebsregler 80 zur Generierung des Steuersignals m verwendete Geschwindigkeitssollwert $\omega_S$ ist über eine Umschalteinrichtung 81 aus einem ersten Geschwindigkeitswert $\omega_{SN}$ und einem zweiten Geschwindigkeitswert $\omega_{SL}$ auswählbar. Mit Vorteil ist die Umschalteinrichtung 81 mit den wählbaren beiden Geschwindigkeitswerten $\omega_{SN}$ und $\omega_{SL}$ durch Software der Mikrocomputereinheit 66 implementiert. Die Umschalteinrichtung 81 ist über die mit der Mikrocomputereinheit 66 kommunikationsfähigen Sende-Empfängereinheit 65 bedienbar.

Der Antriebsregler 80 umfasst mit Vorteil wenigstens das unter Fig. 1 beschriebene Berechnungsmodul 9, das erste Regelmodul 11 und die erste Vergleichseinrichtung 10.

Der Stellantrieb 60 ist über die externe Station 70 drahtlos steuerbar und umfasst eine auf die Sende-Empfängereinheit 65 des Stellantriebs 60 abgestimmte weitere Sende-Empfängereinheit 82, eine Bedieneinrichtung 83 und mit Vorteil auch eine Zeitsteuerung 84.

Die Bedieneinrichtung 83 ist eine Benutzerschnittstelle zur Programmierung der Zeitsteuerung 84. Durch die Zeitsteuerung 84 wird ein für den Stellantrieb 60 erlaubter Geräuschpegel 85 in Abhängigkeit einer Zeitachse 86 festgelegt. Der Geräuschpegel 85 ist vorteilhafterweise aus zwei Werten auswählbar, wobei hier der von der Tageszeit t abhängige erlaubte Geräuschpegel 85 von einem Benutzer über die Bedieneinrichtung 83 einem normalen Geräuschpegel N oder einem niedrigen Geräuschpegel L zuzuordnen ist. Mit Vorteil hat die Zeitsteuerung 84 eine programmierbare Tages- und/oder Wochenstruktur.

Eine erfindungsgemässe Ausführung des Stellantriebs 60 umfasst zwei Betriebsarten, nämlich "normal" und "leise", die mit Vorteil über die Zeitsteuerung 84 aufgrund des zeitabhängig programmierten Geräuschpegels 85 gesteuert werden.

Der zulässige Geräuschpegel ist anwendungsabhängig. Wird der Stellantrieb 60 beispielsweise in einem Schlafzimmer betrieben, ist - wie im beispielhaften Diagramm der Zeitsteuerung 84 dargestellt - der zulässige Geräuschpegel 85 typischerweise in den Nachtstunden niedriger als während der Tageszeit.

Die beiden Betriebsarten sind über den zulässigen Geräuschpegel 85 definiert. Ein vom Stellantrieb 60 verursachtes Geräusch ist grundsätzlich von der Geschwindigkeit der bewegten Teile des Stellantriebs 60 abhängig. Der vom Antriebsregler 80 benutzte Geschwindigkeitssollwert $\omega_S$ bestimmt damit direkt den Pegel des vom Stellantrieb 60 verursachten Geräusches. Der erste Geschwindigkeitswert $\omega_{SN}$ wird vorteilhafterweise so festgelegt, dass der Energieverbrauch des Stellantriebs 60 beim Betätigen des Stellglieds 5 aus einer ersten Endlage in eine zweite Endlage minimal ist. Der zweite Geschwindigkeitswert $\omega_{SL}$ hingegen wird anwendungsspezifisch und entsprechend niedriger als der erste Geschwindigkeitswert $\omega_{SN}$ festgelegt, und zwar so, dass das vom Stellantrieb 60 verursachte Geräusch den niederen Wert S nicht überschreitet. Mit Vorteil werden bei der Festlegung des zweiten Geschwindigkeitswerts $\omega_{SL}$ allfällig vorhandene Eigenresonanzstellen der Getriebeeinheit 63 berücksichtigt.

Messungen bei einem gewissen Ausführungsbeispiel des Stellantriebs haben gezeigt, dass eine Reduktion des Geschwindigkeitssollwerts $\omega_S$ um 100 Umdrehungen pro Minute eine hörbare Reduktion des Geräuschpegels ergeben. Im genannten Ausführungsbeispiel ergab sich der niedrigste Batterieverbrauch bei 1200 Umdrehungen pro Minute, in der Betriebsart "leise" wurde der Elektromotor auf 800 Umdrehungen pro Minute geregelt.

In der Betriebsart "normal" regelt der Antriebsregler 80 nach dem über die Umschalteinrichtung 81 vorgegebenen ersten Geschwindigkeitswert $\omega_{SN}$, in der Betriebsart "leise" hingegen nach dem zweiten Geschwindigkeitswert $\omega_{SL}$. Durch die anwendungsgerechte Programmierung der Zeitsteuerung 84 arbeitet der Stellantrieb 60 wenn immer möglich energieoptimiert und, wenn wirklich notwendig, mit dem niedrigen Geräuschpegel L. Der Stellantrieb (60) ist daher Batterieenergie sparend auch im Wohnbereich einsetzbar.

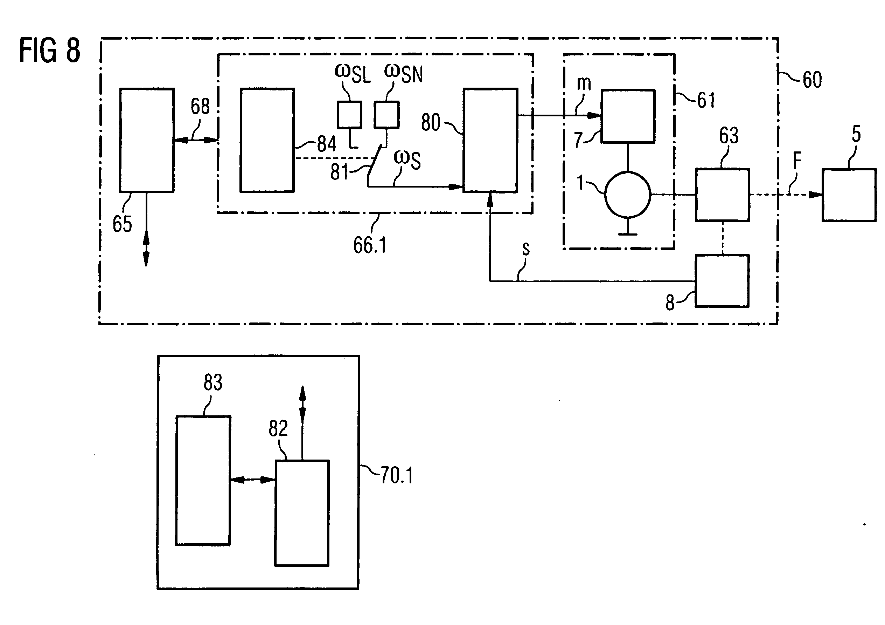

In der Fig. 8 ist ein weiteres Ausführungsbeispiel des Stellantriebs 60 dargestellt. Eine Variante 66.1 der Mikrocomputereinheit umfasst neben dem Antriebsregler 80 und der Umschalteinrichtung 81 auch die Zeitsteuerung 84. Eine Variante 70.1 der externen Station weist die Sender-Empfängereinheit 82 und die Bedieneinrichtung 83 auf, über welche die Zeitsteuerung 84 mittels drahtloser Kommunikation programmierbar ist.

Bezugszeichenliste

| | |
|---|---|
| 1 | Elektromotor |
| 2 | Getriebe |
| 3 | Transformationselement |
| 4 | Stössel |
| 5 | Stellglied |
| 6 | Spannungsquelle |
| 7 | Motortreibermodul |
| 8 | Sensoreinrichtung |
| 9 | Berechnungsmodul |
| 10 | Vergleichseinrichtung, erste |
| 11 | Regelmodul, erstes |
| 12 | Vergleichseinrichtung, zweite |
| 13 | Regelmodul, zweites |
| 20 | Treibereinheit |
| 21 | Brückenschaltung |
| 22 | elektronischer Schalter |
| 23 | elektronischer Schalter |
| 24 | elektronischer Schalter |
| 25 | elektronischer Schalter |
| 30 | Schliesskörper |
| 31 | Feder |
| 32 | Ventilsitz |
| 33 | Antriebsspindel |
| 34 | Längsachse |
| 35 | Aussengewinde |
| 36 | Getrieberad |
| 37 | Luftspalt |
| 40 | Rechenmodul |
| 60 | Stellantrieb |
| 61 | Antriebseinheit |
| 62 | Steuer- und Regeleinheit |
| 63 | Getriebeeinheit |
| 64 | Spannungsregler |
| 65 | Sende-Empfängereinheit |
| 66 | Mikrocomputereinheit |
| 66.1 | Variante der Mikrocomputereinheit |
| 68 | Kommunikationskanal |
| 70 | externe Station |
| 70.1 | Variante der externen Station |
| 71 | Computernetz |
| 72 | optisches Muster |
| 73 | Lichtquelle |
| 74 | Detektoreinheit |
| 75 | Modulationseinrichtung |
| 76 | Schaltvorrichtung |
| 80 | Antriebsregler |
| 81 | Umschalteinrichtung |
| 82 | Sender-Empfängereinheit, weitere |
| 83 | Bedieneinrichtung |
| 84 | Zeitsteuerung |

85     erlaubter Geräuschpegel
86     Zeitachse

$M_M$     Drehmoment
$M_A$     Antriebsmoment
H     Hub
F     Stellkraft
$F_A$     Wert der Stellkraft (Ventilberührpunktkraft)
$F_B$     Wert der Stellkraft (Schliesspunktkraft)
$F_C$     Wert der Stellkraft (Ventilabsperrkraft)
s     Signal der Sensoreinrichtung
$\omega$     Geschwindigkeitssignal
$\omega_s$     Geschwindigkeitssollwert
p     Positionssignal
$p_s$     Sollpositionssignal
$I_M$     Strom durch den Elektromotor
m     Steuersignal
$H_0$     Bezugswert
$H_{0F}$     Absperrwert
q     Durchfluss
$F_E$     Schätzwert für die Stellkraft
k     Startsignal
$k_U$     Konstante, erste
$k_\omega$     Konstante, zweite
$k_F$     Konstante, dritte
$U_B$     Batteriespannung
$U_M$     Motorspannung

$R_i$     Innenwiderstand
$U_s$     Betriebsspannung
c     Taktsignal
a     Aktivierungssignal

$\omega_{SN}$     erster Geschwindigkeitswert
$\omega_{SL}$     zweiter Geschwindigkeitswert

L     niedriger Geräuschpegel
N     normaler Geräuschpegel

**Patentansprüche**

**1.** Stellantrieb mit einem Elektromotor (1) zur Betätigung eines Stellglieds (5) zwischen zwei nutzbaren Endlagen ($H_0$, $H_{100}$), und einer Reglereinrichtung zur Regelung der Drehzahl des Elektromotors (1) über eine geschlossene Regelschleife (80, 61, 63, 8),
wobei der Stellantrieb (60) über eine
Umschalteinrichtung (81) wahlweise entweder in einer ersten Betriebsart oder in einer zweiten Betrlesart betrieben wird, und
wobei die Reglereinrichtung (80) in der ersten Betriebsart die Drehzahl auf einen ersten Sollwert ($\omega_{SN}$) und in der zweiten Betriebsart auf einen zweiten Sollwert ($\omega_{SL}$) regelt,
wobei der erste Sollwert ($\omega_{SN}$) unter Berücksichtigung einer Erhöhung der Stellkraft derart festgelegt ist, dass der Energieverbrauch beim Betätigen des Stellglieds aus einer ersten Endlage in eine zweite Endlage minimal ist, und
wobei der zweite Sollwert ($\omega_{SL}$) niedriger als der erste Sollwert ($\omega_{SN}$) und derart festgelegt ist, dass ein vom Stellantrieb in der zweiten Betriebsart generierter Geräuschpegel (L) niedriger ist als in der ersten Betriebsart.

**2.** Stellantrieb nach einem vorangehenden Anspruch, **dadurch gekennzeichnet,**
**dass** der Stellantrieb (60) eine Sende-Empfängereinheit (65) zur drahtlosen Kommunikation mit einem vom Stellantrieb (60) getrennten Gerät (70) aufweist, und, dass die Umschalteinrichtung (81) des Stellantriebs (60) vom getrennten Gerät (70) aus steuerbar ist.

3. Stellantrieb nach einem vorangehenden Anspruch, **dadurch gekennzeichnet, dass** die Betriebsart des Stellantriebs (60) von der Uhrzeit abhängig über eine Zeitsteuerung (84) steuerbar ist.

4. Stellantrieb nach Anspruch 3, **dadurch gekennzeichnet, dass** die Betriebsart des Stellantriebs (60) über eine Funkverbindung fernsteuerbar ist.

5. Stellantrieb nach Anspruch 4, **dadurch gekennzeichnet, dass** die Zeitsteuerung (84) eine Tagesstruktur aufweist.

6. Stellantrieb nach Anspruch 4, **dadurch gekennzeichnet, dass** die Zeitsteuerung (84) eine Wochenstruktur aufweist.

**Claims**

1. Actuating drive having an electric motor (1) for operating an actuator (5) between two useful final positions ($H_0$, $H_{100}$) , and having a control device for controlling the speed of the electric motor (1) via a closed loop (80, 61, 63, 8), the actuating drive (60) being optionally operated, via a changeover device (81), either in a first operating mode or in a second operating mode, and
the control device (80) controlling the speed to a first setpoint ($\omega_{SN}$) in the first operating mode, and to a second setpoint ($\omega_{SL}$) in the second operating mode,
the first setpoint ($\omega_{SN}$), taking into account an increase of the actuating force, being fixed in such a way that the energy consumption during operation of the actuator from a first final position into a second final position is minimal, and
the second setpoint ($\omega_{SL}$) being fixed lower than the first setpoint ($\omega_{SN}$) and in such a way that a noise level (L) generated by the actuating drive in the second operating mode is lower than in the first operating mode.

2. Actuating drive as claimed in the preceding claim, **characterized in that** the actuating drive (60) has a transceiver unit (65) for wireless communication with a device (70) separated from the actuating drive (60), and **in that** the changeover device (81) of the actuating drive (60) can be controlled from the separate device (70).

3. Actuating drive as claimed in a preceding claim, **characterized in that** the operating mode of the actuating drive (60) can be controlled as a function of the time of day via a time controller (84).

4. Actuating drive as claimed in Claim 3, **characterized in that** the operating mode of the actuating drive (60) can be remotely controlled via a radio link.

5. Actuating drive as claimed in Claim 3, **characterized in that** the time controller (84) has a day structure.

6. Actuating drive as claimed in Claim 3, **characterized in that** the time controller (84) has a week structure.

**Revendications**

1. Mécanisme de commande doté d'un moteur électrique (1) pour l'actionnement d'un actionneur (5) entre deux positions finales ($H_0$, $H_{100}$) , et d'un dispositif régulateur pour le réglage du régime du moteur électrique (1) au moyen d'une boucle de réglage (80, 61, 63, 8) fermée,
le mécanisme de commande (60) étant exploité au moyen d'un dispositif de commutation (81) au choix dans un premier mode de service ou dans un second mode de service, et
le dispositif régulateur (80) réglant dans un premier mode de service le régime sur une première valeur de consigne ($\omega_{SN}$) et dans le second mode de service sur une seconde valeur de consigne ($\omega_{SL}$),
la première valeur de consigne ($\omega_{SN}$) étant fixée en tenant compte d'une élévation de la force de réglage de telle sorte que la consommation d'énergie est minimum lors de l'actionnement de l'actionneur à partir d'une première position finale dans une seconde position finale, et
la seconde valeur de consigne ($\omega_{SL}$) étant plus faible que la première valeur de consigne ($\omega_{SN}$) et étant fixée de telle sorte qu'un niveau de bruit (L) généré par le mécanisme de commande dans le second mode de service est plus faible que dans le premier mode de service.

**2.** Mécanisme de commande selon une revendication précédente, **caractérisé en ce que,**
le mécanisme de commande (60) présente une unité émetteur-récepteur (65) pour la communication sans fil avec un appareil (70) séparé du mécanisme de commande, et **en ce que** le dispositif de commutation (81) du mécanisme de commande (60) peut être commandé à partir de l'appareil (70) séparé.

**3.** Mécanisme de commande selon une revendication précédente, **caractérisé en ce que**
le mode de service du mécanisme de commande (60) peut être commandé en fonction de l'heure au moyen d'une commande de temps (84).

**4.** Mécanisme de commande selon la revendication 3, **caractérisé en ce que** le mode de service du mécanisme de commande (60) peut être télécommandé au moyen d'une liaison radio.

**5.** Mécanisme de commande selon la revendication 4, **caractérisé en ce que** la commande de temps (84) présente une structure par jour.

**6.** Mécanisme de commande selon la revendication 4, **caractérisé en ce que** la commande de temps (84) présente une structure par semaine.

## FIG 1

$p_S$ $p_S-p$ $k$ $\omega_S$ $\omega_S-\omega$ 11 $m$ $U_B$

+ − 12 13 + − 10 7 6

$I_M$

$U_M$ $M_M$ 2 $M_A$ 3

1 H

$\omega$ 4

F

9 $s$ 8 5

$p$

## FIG 2

20 $U_B$ 6

21

22

$R_i$

$m$ 24

$i_M$ M

$\epsilon$

1

23

25

EP 1 727 270 B1

FIG 3A

FIG 3B

FIG 3C

12

FIG 4

FIG 5

**FIG 6**

EP 1 727 270 B1

14

EP 1 727 270 B1

FIG 7

$\omega_{SL}$  $\omega_{SN}$

81  $\omega_S$

65

66

80

m

7

1

61

63

s

8

60

F

5

83

84

85

N

L

86

0  6  22  24  t [h]

70

82

FIG 8

EP 1 727 270 B1

**EP 1 727 270 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2800704 A
- DE 2952695 A
- DE 4221094 A
- WO 9915822 A1